# EUROPEAN PATENT APPLICATION

(11) **EP 4 797 381 A1**
(43) Date of publication of application: **26.08.2026**
(21) Application number: 25159992.4
(22) Date of filing: 25.02.2025
(51) Int. Cl.: H01M 10/613, H01M 50/673, A62C 3/16, A62C 37/14, H01M 10/6569, H01M 50/271, H01M 50/383, H01M 50/609, H01M 50/209, H01M 50/325, H01M 50/358

(54) **BATTERY SYSTEM AND VEHICLE INCLUDING THE BATTERY SYSTEM**

(71) Applicant: SAMSUNG SDI CO., LTD., Yongin-si, Gyeonggi-do 17084 (KR)
(72) Inventor: Musa, Bardh, 8053 Graz (AT); Rabanser, Mike, 8010 Graz (AT); Hofer, Georg, 8053 Graz (AT)
(74) Representative: Gulde & Partner

(57) **Abstract**

The present disclosure refers to battery system (100), including a battery housing (11) including a cover element (20), a plurality of battery cells (12) accommodated within the battery housing (11), wherein each of the battery cells (12) includes a venting side (13) with a venting exit (14) for allowing a venting gas stream (V) to exit the battery cells (12) in case of a thermal runaway, the venting sides (13) facing the cover element (20), an extinguishing agent supply (40), a first supply pipe (30) connected to the extinguishing agent supply (40) and extending laterally along the venting exits (14) of the battery cells (12) at a first side, a first outlet pipe (32) for each of the battery cells (12), and the first outlet pipe (32) connected to the first supply pipe (30) and extending towards the venting exit (14) of the associated battery cell (12) such that a free end (34) of the first outlet pipe (32) is located laterally of the venting exit (14) and directed at the venting exit (14), wherein the first outlet pipe (32) is configured to expel an extinguishing agent, supplied by the extinguishing agent supply (40) and the first supply pipe (30), via its free end (34) onto the venting exit (14) when exerted to the venting gas stream (V).

## Description

### Field of the Disclosure

The present invention relates to a battery system and a vehicle including the battery system.

### Technological Background

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SOC) or depth of discharge (DOD) to indicate the charge level of the battery cell, state of health (SOH; a variously-defined measurement of the remaining capacity of the battery cell as a percent of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by overcurrent, over-voltage (during charging), over-temperature, under-temperature, overpressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A venting concept for a battery in the related art is to let the venting gas stream discharged by the battery cell(s) expand into the battery housing and escape through a housing venting valve to the outside (e.g., to the environment of the battery housing). The venting gas stream thereby heats up the components inside the battery housing such as the other battery cells. For example, particles from the venting gas stream may deposit onto the battery cells which may lead to thermal propagation and may incite thermal runaway in adjacent battery cells.

Also, electrical cell insulations of the affected battery cell, for example plastic foils, may be damaged by the thermal runaway. That is, if one or more battery cells overheat the cell insulations may melt. This can result in a low electrical resistance between parts or components with high differential voltage (>20V), causing internal short circuits and arcing. In the event of thermal runaway of a single cell, the environment heats up due to the exothermic reaction of the cell. The energy released is constrained by the size and chemistry of the cell, necessitating the implementation of adequate thermal insulation to prevent thermal propagation.

To mitigate thermal propagation, a sprinkler pipe with a fire extinguishing agent, e.g. a liquid such as water, may be placed above the venting exits of the battery cells and may expel liquid onto a battery cell affected by a thermal runaway. However, with such an arrangement the pipe may partially block the venting exits, which may prevent the affected battery cell from degassing effectively. In addition, the liquid when exiting the pipe through an opening in a side wall of the pipe results in the exiting liquid having a relatively wide spray angle, which in turn makes it difficult for the liquid to enter the interior of the affected battery cell.

It is thus an object of the present invention to overcome or reduce at least some of the drawbacks of the prior art and to provide a battery system which more securely handles a thermal runaway of one or more of its battery cells.

### Summary of Invention

The invention is defined by the appended claims. The description that follows is subjected to this limitation. Any disclosure lying outside the scope of the claims is only intended for illustrative as well as comparative purposes.

According to an embodiment, a battery system includes a battery housing including a cover element, a plurality of battery cells accommodated within the battery housing, wherein each of the battery cells includes a venting side with a venting exit for allowing a venting gas stream to exit the battery cells in case of a thermal runaway, the venting sides facing the cover element, an extinguishing agent supply, a first supply pipe connected to the extinguishing agent supply and extending laterally along the venting exits of the battery cells at a first side, a first outlet pipe for each of the battery cells, the first outlet pipe connected to the first supply pipe and extending towards the venting exit of the associated battery cell such that a free end of the first outlet pipe is located laterally of the venting exit and directed at the venting exit, wherein the first outlet pipe is configured to expel an extinguishing agent, supplied by the extinguishing agent supply and the first supply pipe, via its free end onto the venting exit when exerted to the venting gas stream.

According to an embodiment, the battery system further includes a second supply pipe connected to the extinguishing agent supply and extending laterally along the venting exits of the battery cells at a second side opposite the first side, and a second outlet pipe for each of the battery cells, the second outlet pipe connected to the second supply pipe and extending towards the venting exit of the associated battery cell such that a free end of the second outlet pipe is located laterally of the venting exit and opposite of the free end of the first outlet pipe and is directed at the venting exit, wherein the second outlet pipe is configured to expel an extinguishing agent supplied by the extinguishing agent supply and the second supply pipe via its free end when exerted to the venting gas stream.

According to an embodiment, the first supply pipe and/or the second supply pipe is attached to an inner surface of the cover element.

According to an embodiment, the cover element is a top cover.

According to an embodiment, the first outlet pipe extends towards the venting exit of the associated battery cell in an angle with respect to the cover element and/or wherein the second outlet pipe extends towards the venting exit of the associated battery cell in an angle with respect to the cover element.

According to an embodiment, the angle is between 25° to 45°, or between 30° to 40°, or about 35°.

According to an embodiment, the first outlet pipe includes a first sealing element sealing the free end of the first outlet pipe, the first sealing element being adapted to give in when the first sealing element exposed to the venting gas stream, and/or the second outlet pipe includes a second sealing element sealing the free end of the second outlet pipe, the second sealing element being adapted to give in when the second sealing element is exposed to the venting gas stream.

According to an embodiment, an electric vehicle includes the battery system according to disclosure.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a perspective view on a battery system according to an embodiment.
FIG. 2 illustrates a front view of the battery system of FIG. 1 in a first state.
FIG. 3 illustrates a front view of the battery system of FIG. 1 in a second state.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The term "consisting essentially of" means that specific further components can be present, namely those not materially affecting the essential characteristics of a composition.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to an aspect of the present disclosure, a battery system is provided. The battery system includes a battery housing with a cover element and a plurality of battery cells accommodated inside the housing. The cover element may be a top cover or a bottom cover. The battery housing may include a housing base encasing the battery cells from five sides, wherein the cover element encases the battery cells from the sixth side. The battery cells may be interconnected via electrical connecting means, for example, busbars, contacting the respective electrode terminals of the battery cells to form one or more battery modules/battery packs. The battery cells are arranged to form one or more battery packs, wherein in a battery pack the battery cells are electrical interconnected, for example, in a series and/or in parallel as explained above. Multiple of these battery packs may form a battery module. Two or more of the battery packs may be stacked to form cell stacks. The battery cells may, for example, be prismatic, pouch type or cylindrical cells.

Each of the battery cells includes a venting exit at a venting side of the battery cell, which is preferably the terminal side of the battery cells, the venting exits allowing a venting gas stream to escape the battery cells during a thermal runaway. Venting valves may be provided at the venting exits. The venting sides of the battery cells face the cover element of the battery housing. In other words, the cover element is arranged opposite the venting sides of the battery cells thereby covering the battery cells. When assembling the battery system, the battery cells may be placed into the housing base of the battery housing and, subsequently, the cover element may be placed onto the housing base so that the battery cells are completely encased by the battery housing.

The battery system includes a first supply pipe that extends laterally along the venting exits of the battery cells. The battery system may include at least one supply pipe, for example the first supply pipe and a second supply pipe which extend laterally along the venting exits of the battery cells on opposite sides, as explained below. For example, the at least one supply pipe may extend parallel to a stacking direction of the battery cells. The first supply pipe is in fluid connection with an extinguishing agent supply of the battery system which may supply an extinguishing agent for extinguishing and/or cooling in case of a thermal runaway of one of the battery cells. The extinguishing agent may be a gas or a liquid, for example water. The extinguishing agent may be still or in movement, may for example be pumped through the at least one pipe. The extinguishing agent inside pipe may be under pressure. The extinguishing agent being under pressure may mean that the extinguishing agent has or is subjected to a pressure higher than the pressure inside the battery housing, e.g. higher than atmospheric pressure. The extinguishing agent may be any agent suitable to cool down the affected battery cell and the venting gas stream, for example water, a water solution or a liquid chemical. The extinguishing agent may be under pressure by a pressure generating unit of the battery system. The first supply pipe may, for example, be made of plastics or a metal such as aluminum.

The battery system further includes a first outlet pipe for each of the battery cells. In other words, the battery system includes multiple first outlet pipes, one for each of the battery cells. Each of the first outlet pipes is connected to the first supply pipe and via the first supply pipe to the extinguishing agent supply. The first outlet pipe extends towards the venting exit of the associated battery cell, i.e. of the battery cell at which the first outlet pipe is disposed, wherein a free end, or in other words an exposed end, of the first outlet pipe is directed at the venting exit of said battery cell. The free end is located laterally, or in other words next to, the venting exit. The free end being located laterally of the venting exit means that the free end is not located directly above the venting exit but rather next to the venting exit. In other words, each of the first outlet pipes has a first end via which the first outlet pipe is connected to the first supply pipe and a second end, i.e. the free end, which is directed at the respective venting exit. The first outlet pipe may, for example, be made of plastics or a metal such as aluminum. The first outlet pipe may have an inner diameter of 2.6 mm to 3.7 mm, for example of 3.1 mm.

According to the disclosure, the first outlet pipe is configured to expel the extinguishing agent, supplied by the extinguishing agent supply and the first supply pipe, via its free end onto the respective venting exit when exerted to the venting gas stream. For example, the free end may rupture or melt when a venting gas stream exits through the venting exit of one of the battery cells and hits the free end disposed laterally to the venting exit. The first outlet pipe may thus rupture close to the venting exit from which the venting gas stream is exhausted. The free end of the first outlet pipe may rupture due to the heat flow of the venting gas stream damaging the free end or a sealing element disposed at the free end. For example, the hot gases and particles of the venting gas stream may burn or melt the free end or the sealing element. As a consequence, the extinguishing agent is expelled from, or sprays out of, the free end of the first outlet pipe onto the underlying, affected battery cell(s) thereby cooling the same and also cooling the ejected venting gas stream.

As a result of the venting gas stream cooling down, the temperature of the venting gas stream decreases significantly, thereby averting potential melting of battery components and preventing arcing and thermal propagation. If the extinguishing agent is under pressure or exerted to a pressure when rupturing, the extinguishing agent is expelled rapidly and will quickly disperse or spray out from the free end of the first outlet pipe which improves the cooling effect. Further, as the free end is located laterally of the venting exit, the first outlet pipe will not block the venting exit. Additionally, because the extinguishing agent exits the first outlet pipe through its free end directed at the venting exit, an improved guidance of the extinguishing agent is achieved. For example, a spray conus of the extinguishing agent exiting the free end may be narrowed. As a consequence, the extinguishing agent may directly target the venting exit and may enter through the venting exit, for example through an opened venting valve, even though the free end is not arranged directly above/does not overlap with the venting exit. Thus, if one of the battery cells goes into thermal runaway, the extinguishing agent may be delivered inside the battery cell and thus to the hottest point of the battery cell. This decreases the temperature significantly and keeps the adjacent cells in the safe zone, preventing thermal propagation. The affected battery cell may be cooled due to evaporation of the extinguishing agent. Tests were performed, with water as an extinguishing agent, that a neighboring battery cell reached a maximum temperature of merely 80°C, and this using only a thin cell spacer of 1.8mm disposed between the affected battery cell and the neighboring battery cell. Thus, according to the disclosure, thinner cell spacers may be used than with known battery system while still providing for a sufficient cooling and prevention of thermal propagation. Thus, cost may be saved.

According to an embodiment, the battery system further includes a second supply pipe. As mentioned above, multiple supply pipes may be provided, for example the first supply pipe and a second supply pipe which extend laterally along the venting exits of the battery cells on opposite sides. According to the present embodiment, the second supply pipe is connected to the extinguishing agent supply and extends laterally along the venting exits of the battery cells at a second side opposite the first side, meaning opposite the side at which the first supply pipe extends. Further, according to the present embodiment, a second outlet pipe is provided for each of the battery cells, the second outlet pipe connected to the second supply pipe and extending towards the venting exit of the associated battery cell, wherein a free end of the second outlet pipe is located laterally of the venting exit of the associated battery cell and opposite of the free end of the first outlet pipe. The free end of the second outlet pipe is directed at the venting exit as well. The second outlet pipe is configured to expel the extinguishing agent supplied by the extinguishing agent supply and the second supply pipe via its free end when exerted to the venting gas stream. Thus, the second supply pipe and second outlet pipe may be the same as the first supply pipe and first outlet pipe, respectively, but arranged at an opposite side from the venting exits, for example mirrored along a stacking axis of the battery cell. The explanations and embodiments disclosed with respect to the first supply pipe and first outlet pipe may also be valid for the second supply pipe and second outlet pipe. Providing not only one but two such pipes improves the above-explained effects such as the cooling and preventing of thermal propagation. Also, the second supply pipe and second outlet pipe provide redundancy in that even if one of the pipes gets blocked, for example by the particles released during the thermal runaway, the other pipe may still be able to expel the extinguishing agent on or into the affected battery cell. The second outlet pipe may have an inner diameter of 2.6 mm to 3.7 mm, for example of 3.1 mm.

According to an embodiment, the first supply pipe and/or the second supply pipe is attached to an inner surface of the cover element. Thus, also the first outlet pipe and/or second outlet pipe may be attached to an inner surface of the cover element, for example via the first supply pipe and/or the second supply pipe. Thus, the at least one supply pipe/outlet pipe may be installed without additional work when installing the cover element which facilitates the assembly process. That is, the at least one supply pipe/outlet pipe may be installed by simply placing the cover element, for example the top cover, onto the housing base of the battery housing after having inserted the battery cells. According to an embodiment, the cover element is a top cover. The extinguishing agent may then easily reach the below arranged venting exit of the affected battery cell facilitated by gravity. The cover element may, however, also be a bottom cover. The extinguishing agent may then reach the above arranged venting exit for example when pressurized with a pressure high enough to overcome gravity.

According to an embodiment, the first outlet pipe extends towards the venting exit of the associated battery cell in an angle with respect to the cover element. In an embodiment, the second outlet pipe extends towards the venting exit of the associated battery cell in an angle with respect to the cover element. According to an embodiment, the angle may be between 25° to 45°, or between 30° to 40°, or the angle may be 35°. Providing the at least one outlet pipe at such an angle may facilitate directing the free end and thus the extinguishing agent at the venting exit while allowing for the placing of the at least one outlet pipe laterally to the venting exit instead of directly above.

According to an embodiment, the first outlet pipe includes a first sealing element sealing the free end of the first outlet pipe, the first sealing element being adapted to give in, for example to melt, when the first sealing element is exposed to the venting gas stream. The venting gas stream may be ejected from the venting exit with high pressure and temperature. Therefore, when the first sealing element is exposed to the venting gas stream, it may be exerted to the heat and pressure of venting gas stream causing it to melt. According to an embodiment, the second outlet pipe includes a second sealing element sealing the free end of the second outlet pipe, the second sealing element being adapted to give in, for example to melt, when the second sealing element is exposed to the venting gas stream. The sealing element may be configured to sufficiently seal the respective outlet pipe so that, during regular operation of the battery system, the extinguishing agent is held safely within the pipe system. When the sealing element is exposed to the venting gas stream, however, the sealing element may give in and thus may allow for the extinguishing agent to exit the respective outlet pipe at its free end. For example, the sealing element may include or consist of a meltable plug inserted into the free end of the respective outlet pipe, the meltable plug being adapted to melt when the meltable plug is exposed to the temperature of the venting gas stream.

### Specific Embodiments

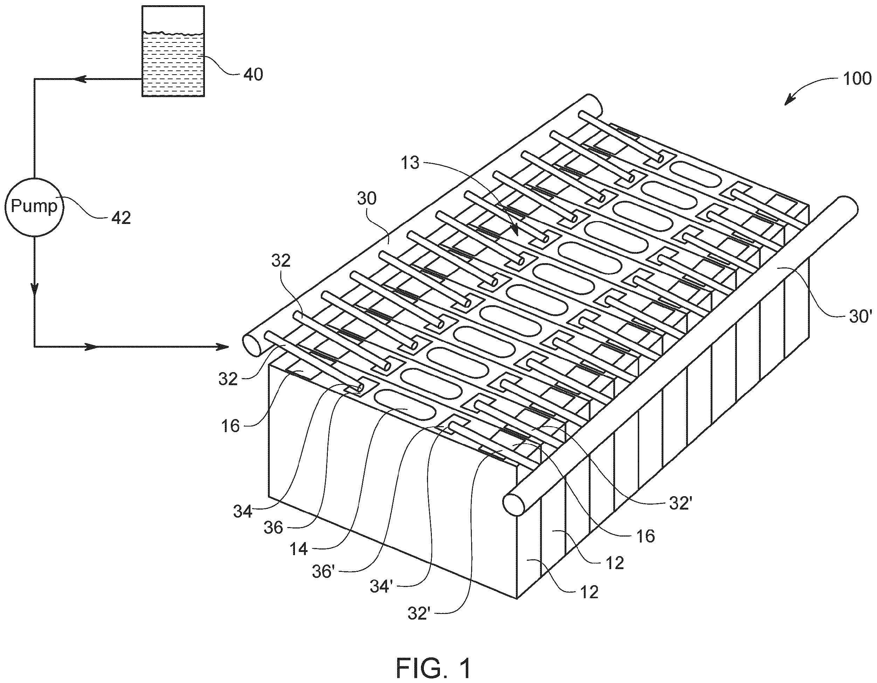

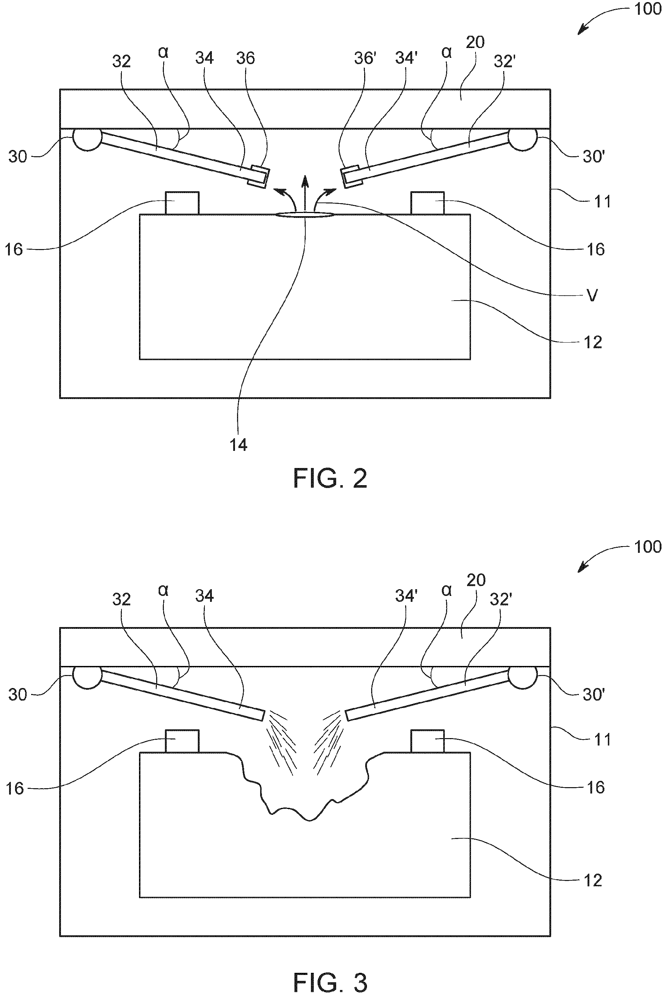

FIG. 1 is a perspective view illustrating schematically a battery system 100 according to an embodiment. FIGS. 2 and 3 show the battery system 100 from the front. The battery system 100 includes a battery housing 11 accommodating a plurality of battery cells 12 and a cover element 20 covering the battery cells 12 at their top. The cover element 20 may thus be a top cover. The cover element 20 may form part of the battery housing 11. The battery housing 11 and the cover element 20 are not shown in FIG. 1 to allow a view of the inner elements of the battery system 100.

Each of the battery cells 12 includes a venting side 13 with a venting exit 14, wherein venting valves (not shown) may be placed inside the venting exits 14. In case one of the battery cells 12 is affected by a thermal runaway, a venting gas stream V may exit the affected battery cell 12 through the venting exit 14 as illustrated in FIG. 2. As can also be seen in FIG. 2, the battery cells 12 face the cover element 20 with their venting sides 13. At the venting side 13, the battery cells 12 may further include electrode terminals 16 for electrical connection.

A first supply pipe 30 and a second supply pipe 30' of the battery system 100 are connected to an extinguishing agent supply 40 as illustrated schematically. An extinguishing agent may be supplied from extinguishing agent supply 40 via a pump 42 to the first supply pipe 30 and the second supply pipe 30'.

The first and second supply pipes 30, 30' extend laterally along the venting exits 14 of the battery cells 12 at opposite sides as can be seen in FIG. 1. That is, the first supply pipe 30 extends along a first side of the venting exits 14 and the second supply pipe 30' along a second side of the venting exits 14, wherein the second side is opposite of the first side. In the illustrated embodiment, the first and second supply pipes 30, 30' are placed so far outwards that they extend at opposite sides from the battery cells 12 but the first and second supply pipes 30, 30' may instead extend above the battery cells 12. The first and second supply pipes 30, 30' may each be attached to an inner surface of the cover element 20 as shown in FIGS. 2 and 3.

Outlet pipes 32, 32' extend from the first and second supply pipes 30, 30', respectively, towards the venting exits 14. That is, the battery system 100 includes multiple first outlet pipe 32, one for each of the battery cells 12, wherein the first outlet pipe 32 is connected to the first supply pipe 30 and extends towards the venting exit 14 of the associated battery cell 12. The first outlet pipe 32 has a free end 34 that is located laterally of, or next to, the venting exit 14 at the first side and directed at the venting exit 14. Correspondingly, the battery system 100 includes multiple second outlet pipe 32', one for each of the battery cells 12, wherein the second outlet pipe 32' is connected to the second supply pipe 30' and extends towards the venting exit 14 of the associated battery cell 12. The second outlet pipe 32' has a free end 34' that is located laterally of, or next to, the venting exit 14 at the second side, i.e. opposite the first side, and directed at the same venting exit 14.

As can be seen in FIGS. 2 and 3, the first outlet pipe 32 and the second outlet pipe 32' each extend towards the venting exit 14 of the associated battery cell 12 in an angle α with respect to the cover element 20. The angle α may be about 35°.

Further, the first and second outlet pipes 32, 32' include first and second sealing elements 36, 36', respectively. The first and second sealing elements 36, 36' are disposed at the free ends 34, 34' and may, for example, be configured as meltable plugs that plug the free ends 34, 34' preventing that the extinguishing agent, which is supplied to the first and second outlet pipes 32, 32' via the first and second supply pipes 30, 30', exits the first and second outlet pipes 32, 32' during regular operation of the battery system 100.

The first and second outlet pipes 32, 32' are configured to expel the extinguishing agent, supplied by the extinguishing agent supply 40 and the first and second supply pipes 30, 30', via their free ends 34, 34' onto the venting exit 14 when exerted to the venting gas stream V. That is, in case of a thermal runaway occurring inside one of the battery cells 12, a venting gas stream V including hot gases and particles is exhausted through the venting exit 14 as illustrated in FIG. 2 via arrows. The venting gas stream V comes into contact with the free ends 34, 34' of the first and second outlet pipes 32, 32' thereby - due to the high temperature of the venting gas stream V of up to 1000°C - melting the sealing elements 36, 36' and thus opening up the free ends 34, 34'.

As a consequence of the sealing elements 36, 36' melting, the extinguishing agent, for example water, is expelled from the free ends 34, 34' of the first and second outlet pipes 32, 32' and is directly precisely towards the venting exit 14. The expelled extinguishing agent thereby cools the ejected venting gas stream V and also the affected battery cell 12. This is shown in FIG. 3. FIG. 3 illustrates the battery cell 12 with an upper part, where the venting exit 14 was disposed, burned off by the thermal runaway.

As the free ends 34, 34' of the first and second outlet pipes 32, 32' are located laterally of the venting exit 14, the first and second outlet pipes 32, 32' will not block the venting exit 14. Additionally, because the extinguishing agent exits the first and second outlet pipes 32, 32' through their free ends 34, 34' directed at the venting exit 14, an improved guidance of the extinguishing agent is achieved. For example, a spray conus of the extinguishing agent exiting the free ends 34, 34' may be narrowed. As a consequence, the extinguishing agent may directly target the venting exit 14 and may even enter through the venting exit 14 even though the free ends 34, 34' are not arranged directly above the venting exit 14. Thus, the extinguishing agent may be delivered into the affected battery cell 12 and thus to the hottest point of the battery cell 12 as shown in FIG. 3 which illustrates the battery cell 12 with an upper part burned off where the venting exit 14 was disposed.

This decreases the temperature significantly and keeps the adjacent battery cells 12 in the safe zone, preventing thermal propagation. The affected battery cell 12 may be cooled due to evaporation of the extinguishing agent. As a result of the venting gas stream cooling down, the temperature of the venting gas stream decreases significantly, thereby averting potential melting of battery components and preventing arcing and thermal propagation. Tests were performed, with water as an extinguishing agent, that a neighboring battery cell reached a maximum temperature of merely 80°C, and this using only a thin cell spacer of 1.8 mm disposed between the affected battery cell 12 and the neighboring battery cell 12. Thus, according to the disclosure, thinner cell spacers may be used than with known battery systems while still providing for a sufficient cooling and prevention of thermal propagation. Thus, cost may be saved.

### Reference signs

- 11: battery housing
- 12: battery cells
- 13: venting side
- 14: venting exits
- 16: electrode terminals
- 20: cover element
- 30: first supply pipe
- 30': second supply pipe
- 32: first outlet pipe
- 32': second outlet pipe
- 34: free end of first outlet pipe
- 34': free end of second outlet pipe
- 36: sealing element of first outlet pipe
- 36': sealing element of second outlet pipe
- 40: extinguishing agent supply
- 42: pump
- 100: battery system
- V: venting gas stream

## Claims

1. A battery system (100), comprising
a battery housing (11) comprising a cover element (20),
a plurality of battery cells (12) accommodated within the battery housing (11), wherein each of the battery cells (12) comprises a venting side (13) with a venting exit (14) for allowing a venting gas stream (V) to exit the battery cells (12) in case of a thermal runaway, the venting sides (13) facing the cover element (20),
an extinguishing agent supply (40),
a first supply pipe (30) connected to the extinguishing agent supply (40) and extending laterally along the venting exits (14) of the battery cells (12) at a first side, and
a first outlet pipe (32) for each of the battery cells (12), the first outlet pipe (32) connected to the first supply pipe (30) and extending towards the venting exit (14) of the associated battery cell (12) such that a free end (34) of the first outlet pipe (32) is located laterally of the venting exit (14) and directed at the venting exit (14),
wherein the first outlet pipe (32) is configured to expel an extinguishing agent, supplied by the extinguishing agent supply (40) and the first supply pipe (30), via its free end (34) onto the venting exit (14) when exerted to the venting gas stream (V).

2. The battery system (100) according to claim 1, further comprising a second supply pipe (30') connected to the extinguishing agent supply (40) and extending laterally along the venting exits (14) of the battery cells (12) at a second side opposite the first side, and a second outlet pipe (32') for each of the battery cells (12), the second outlet pipe (32') connected to the second supply pipe (30') and extending towards the venting exit (14) of the associated battery cell (12) such that a free end (34') of the second outlet pipe (32') is located laterally of the venting exit (14) and opposite of the free end (34) of the first outlet pipe (32) and is directed at the venting exit (14), wherein the second outlet pipe (32') is configured to expel an extinguishing agent supplied by the extinguishing agent supply (40) and the second supply pipe (30') via its free end (34') when exerted to the venting gas stream (V).

3. The battery system (100) according to claim 1 or 2, wherein the first supply pipe (30) and/or the second supply pipe (30') is attached to an inner surface of the cover element (20).

4. The battery system (100) according to claim 4, wherein the cover element (20) is a top cover.

5. The battery system (100) according to any one of the preceding claims, wherein the first outlet pipe (32) extends towards the venting exit (14) of the associated battery cell (12) in an angle with respect to the cover element (20) and/or wherein the second outlet pipe (32') extends towards the venting exit (14) of the associated battery cell (12) in an angle with respect to the cover element (20).

6. The battery system (100) according to claim 5, wherein the angle is 35°.

7. The battery system (100) according to any one of the preceding claims, wherein the first outlet pipe (32) comprises a first sealing element (36) sealing the free end (34) of the first outlet pipe (32), the first sealing element (36) being adapted to give in when the first sealing element (36) is exposed to the venting gas stream (V), and/or the second outlet pipe (32') comprises a second sealing element (36') sealing the free end (34') of the second outlet pipe (32'), the second sealing element (36') being adapted to give in when the second sealing element (36') is exposed to the venting gas stream (V).

8. An electric vehicle comprising the battery system (10) according to any one of the preceding claims.
